# EUROPEAN PATENT SPECIFICATION

(11) **EP 4 670 348 B1**
(45) Date of publication and mention of the grant of the patent: **13.05.2026**
(21) Application number: 23821709.5
(22) Date of filing: 04.12.2023
(51) Int. Cl.: H04M 3/51

(54) **COMPUTER-IMPLEMENTED METHOD FOR MANAGING VOICE CALL INITIATION**
COMPUTERIMPLEMENTIERTES VERFAHREN ZUR VERWALTUNG DER SPRACHANRUFEINLEITUNG
PROCÉDÉ MIS EN OEUVRE PAR ORDINATEUR POUR GÉRER UNE INITIATION D'APPEL VOCAL

(30) Priority: 23.02.2023 FI 20235218
(43) Date of publication of application: 31.12.2025
(73) Proprietor: Elisa Oyj, 00520 Helsinki (FI)
(72) Inventor: RUUTU, Ville, 00520 Helsinki (FI); RUUTU, Jussi, 00520 Helsinki (FI)
(74) Representative: Papula Oy
(86) International application number: PCT/FI2023/050661
(87) International publication number: WO 2024/175828

(56) References cited:
- EP-A1- 3 448 004
- US-A1- 2019 208 062

## Description

### TECHNICAL FIELD

The present disclosure relates to call processing, and more particularly to a computer-implemented method for managing voice call initiation, a computing device, and a computer program product.

### BACKGROUND

An increasing number of organizations are leveraging the power of Automatic Speech Recognition to build automated systems that handle telephone and voice-based user interactions. Users are able to handle more and more of their requests by interacting with automated voice-based systems. Such system may also be referred to as voicebots.

Publication EP 3448004 A1 discloses a computer-implemented method of forwarding calls, the method comprising the steps of monitoring an active call between an agent and a client using speech recognition, wherein, in the active call, the speech recognition searches for occurrence of at least one key phrase that indicates intention of termination of the call; upon occurrence of at least one key phrase, predicting a remaining time period until the call will be terminated; based on the predicted remaining time period, during the remaining time period, determining a point of time for initiating at least one new call to a client for being handled by the agent; and initiating at least one new call at the determined point of time. Further, the invention relates to a predictive dialer system and a database.

Publication US 2019/208062 A1 discloses a system and a method to calculate expected waiting time of a caller to a calling center, the method including: monitoring, by a monitor circuit, a content of a present communication session; estimating a point of progress of the monitored communication session; comparing the point of progress to a historical statistic; calculating, by a processor, a projection of a duration of a remainder of the present communication session; and providing, by a communication circuit, an expected waiting time (EWT) based upon the projection of the duration of the remainder of the present communication session. Embodiments may include a speech search process to record call progress.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide a computer-implemented method for managing voice call initiation, a computing device, and a computer program product. The foregoing and other objectives are achieved by the features of the independent claims. Further implementation forms are apparent from the dependent claims, the description and the figures.

According to a first aspect, a computer-implemented method for managing voice call initiation comprises: performing at least one voice call according to a preconfigured script, wherein the preconfigured script comprises a plurality of steps; obtaining, during the at least one voice call, a time estimate for performing at least one step of the plurality of steps of the preconfigured script; computing, during the at least one voice call, a remaining time estimate for each voice call in the at least one voice call based on the time estimate for performing the at least one step of the plurality of steps of the preconfigured script; and determining whether to initiate a new voice call during the at least one voice call according to the remaining time estimate of each voice call in the at least one voice call. The method can, for example, utilise available resource more efficiently.

In an implementation form of the first aspect, the determining whether to initiate the new voice call during the at least one voice call according to the remaining time estimate of each voice call in the at least one voice call comprises: obtaining a connecting delay estimate for the new voice call; determining whether there is voice call capacity during or after a time period corresponding to the connecting delay estimate based on the remaining time estimate of each voice call in the at least one voice call; and in response to there being voice call capacity, initiating the new voice call. The method can, for example, utilise available resource more efficiently by estimating the voice call capacity.

In another implementation form of the first aspect, the at least one voice call comprises a plurality of parallel voice calls. The method can, for example, utilise available resource more efficiently when a plurality of voice calls is performed simultaneously.

In another implementation form of the first aspect, the time estimate for performing the at least one step in the plurality of steps of the preconfigured script comprises a maximum time estimate for performing the at least one step and/or an average time estimate for performing the at least one step. The method can, for example, efficiently estimate the time for performing the at least one step.

In another implementation form of the first aspect, the maximum time estimate for performing the at least one step is based at least on a maximum allowed time to perform the at least one step indicated by the preconfigured script. The method can, for example, utilise the preconfigured script in order to efficiently estimate the time for performing the at least one step.

In another implementation form of the first aspect, the preconfigured script comprises at least one branching point corresponding to a question to be presented to a user during the at least one voice call, wherein the at least one branching point is associated with a plurality of branches, wherein each branch in the plurality of branches corresponds to a possible answer that the user can provide to the question. The method can, for example, perform voice calls according to more complex preconfigured scripts.

In another implementation form of the first aspect, the computing, during the at least one voice call, the remaining time estimate for each voice call in the at least one voice call comprises: computing a remaining time estimate for each branch in the plurality of branches; and computing the remaining time estimate for the voice call according to the remaining time estimate of each branch in the plurality of branches. The method can, for example, efficiently estimate the remaining time for preconfigured scripts comprising at least one branching point.

In another implementation form of the first aspect, the computing the remaining time estimate for each branch in the plurality of branches comprises summing the time estimate for performing each step in the branch. The method can, for example, efficiently estimate the remaining time for preconfigured scripts comprising at least one branching point based on the steps in each branch.

In another implementation form of the first aspect, the computing the remaining time estimate for the voice call according to the remaining time estimate of each branch in the plurality of branches comprises: computing the remaining time estimate for the voice call based on a maximum remaining time estimate out of the remaining time estimates of the plurality of branches; and/or computing the remaining time estimate for the voice call based on an average remaining time estimate of the remaining time estimates of the plurality of branches. The method can, for example, efficiently estimate the remaining time for preconfigured scripts comprising at least one branching point based on the maximum time estimate and/or the average time estimate of each branch.

In another implementation form of the first aspect, the method further comprises: obtaining a response to the question from the user via the voice call; selecting a branch out of the plurality of branches according to the response; and updating the remaining time estimate for the voice call according to a time estimate for performing each step in the selected branch. The method can, for example, efficiently estimate the remaining time based on the selected branch.

In another implementation form of the first aspect, the method further comprises, during the at least one voice call, updating the remaining time estimate for the voice call at least once according to a time estimate for performing remaining steps of the preconfigured script. The method can, for example, efficiently update the remaining time estimate during the at least one voice call.

In another implementation form of the first aspect, the time estimate for performing the at least one step of the plurality of steps of the preconfigured script is based on statistical information about at least one previously performed voice call. The method can, for example, efficiently estimate the remaining time based on the statistical information.

In another implementation form of the first aspect, the at least one voice call is performed by a voicebot and the voicebot is configured to perform the at least one voice call according to the preconfigured script. The method can, for example, improve the performance of the voicebot.

According to a second aspect, a computing device comprises at least one processor and at least one memory including computer program code, the at least one memory and the computer program code being configured to, with the at least one processor, cause the computing device to perform the method according to the first aspect.

According to a third aspect, a computer program product comprises program code configured to perform the method according to the first aspect when the computer program product is executed on a computer.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a flow chart representation of a method according to an embodiment;
Fig. 2 illustrates a flow chart representation of a script according to an embodiment;
Fig. 3 illustrates a flow chart representation of a method according to an embodiment; and
Fig. 4 illustrates a schematic representation of a computing device according to an embodiment.

In the following, like reference numerals are used to designate like parts in the accompanying drawings.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

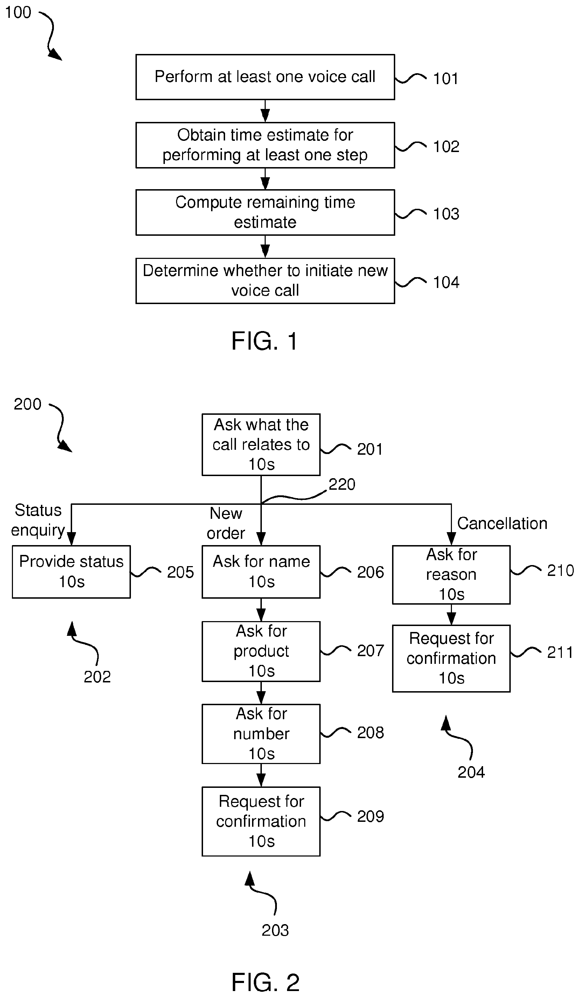

Fig. 1 illustrates a flow chart representation of a method according to an embodiment.

According to an embodiment, a computer-implemented method 100 for managing voice call initiation comprises performing 101 at least one voice call according to a preconfigured script, wherein the preconfigured script comprises a plurality of steps.

The at least one voice call may also be referred to as at least one current voice call, a current voice call, a plurality of current voice calls, or similar.

It should be appreciated that when the method 100 is performed by, for example, a system, the system may perform any number of voice calls and the at least one voice call may not comprise all of these voice calls. For example, such a system may be performing a plurality of voice calls and the at least one voice call may comprise a subset of the plurality of voice calls, such as one voice call of the plurality of voice calls. Thus, the method 100 may not be performed for all voice calls in the plurality of voice calls but only for the subset corresponding to the at least one voice call.

Herein, the preconfigured script may also be referred to as a voicebot script, a preconfigured voicebot script, or similar. The preconfigured script may, for example, comprise instructions how to perform the at least one voice call written in a scripting language and/or a programming language.

Herein, steps of a script may also be referred to as operations or similar.

Each step in the preconfigured script may comprise an operation to be performed during the at least one voice call. An operation may comprise, for example, asking a question from a user, providing information to the user, obtaining an answer to a question from the user, classifying an answer provided by the user, choosing a branch of the preconfigured script according to an answer provided by the user, etc.

The performing 101 the at least one voice call according to the preconfigured script may be performed, for example, in response to a contact request by a user.

The voice call can comprise, for example, a telephone call, a voice over internet protocol (VoIP) call, or any other type of voice call.

A step in the preconfigured script may comprise, for example, providing an audio prompt to a user via the voice call and obtaining a response to the audio prompt from the user via the voice call. The execution of the preconfigured script may depend on the response obtained from the user. For example, the audio prompt may ask a question from the user and the subsequent steps of the preconfigured script may depend on the response provided by the user.

The method 100 may further comprise obtaining 102, during the at least one voice call, a time estimate for performing at least one step of the plurality of steps of the preconfigured script.

In some situations, the time needed to perform a step of the preconfigured script may be estimated quite accurately. For example, if a step comprises asking a question from a user using a pre-recorded question, the time needed to perform the step can be estimated to be the length of the recording, or if the step comprises obtaining an answer from the user to a question, the time needed to perform the step can be estimated to be a preconfigured maximum amount of time the user is allowed to answer the question.

Herein, "obtaining" may comprise, for example, obtaining the data in question from memory, performing some processing and obtaining the data as a result of the processing, receiving the data from a function/method/device/module, reading a file containing audio data, and/or similar.

In some embodiments, the obtaining 102, during the at least one voice call, the time estimate for performing at least one step of the plurality of steps of the preconfigured script may comprise obtaining, during the at least one voice call, a time estimate for performing each step of the plurality of steps of the preconfigured script.

The time estimate for performing at least one step may be, for example, precalculated/precomputed and stored in a memory or any other data storage. Thus, the time estimate for performing at least one step can be obtained from the memory during the at least one voice call. Alternatively or additionally, the obtaining 102, during the at least one voice call, the time estimate for performing at least one step may comprise, for example, computing/calculating the time estimate for performing at least one step during the at least one voice call.

The method 100 may further comprise computing 103, during the at least one voice call, a remaining time estimate for each voice call in the at least one voice call based on the time estimate for performing the at least one step of the plurality of steps of the preconfigured script.

The method 100 may further comprise, determining 104 whether to initiate a new voice call during the at least one voice call according to the remaining time estimate of each voice call in the at least one voice call.

The method 100 can be utilised in initiating the new voice call in a predictive manner by utilising the remaining time estimate for each voice call in the at least one voice call. For example, available voice call capacity can be estimated based on the remaining time estimate for each voice call in the at least one voice call and the decision on whether the new voice call is initiated can be based on the available voice call capacity. This can minimize the waiting time between voice calls in, for example, a voicebot system and, thus, resources of such a system can be utilised more efficiently. On the other hand, the method 100 can also reduce situations in which a new voice call is initiated, the user answers the voice call, but there are no resources to process the new voice call.

According to an embodiment, the determining 104 whether to initiate the new voice call during the at least one voice call according to the remaining time estimate of each voice call in the at least one voice call comprises: obtaining a connecting delay estimate for the new voice call; determining whether there is voice call capacity during or after a time period corresponding to the connecting delay estimate based on the remaining time estimate of each voice call in the at least one voice call; and in response to there being voice call capacity, initiating the new voice call.

The connecting delay may comprise, for example, an estimate of the delay between the new voice call being initiated and the user answering the call. The connecting delay may be affected by various factors, such as the amount of time the user takes the answer the voice call, the amount of time the voice call takes to connect, the user not answering the voice call, etc.

The voice call capacity may be limited due to various factors, such as phone connections, processing resources, networking resources in the case of, for example, VoIP calls, costs of the aforementioned resources, etc.

According to an embodiment, the at least one voice call comprises a plurality of parallel voice calls.

Herein, a plurality of parallel voice calls may refer to voice calls that are at least partially simultaneous. For example, some voice calls in the plurality of parallel voice calls may start and/or end at different times, and when some voice call in the plurality of parallel voice calls ends, a new voice call may be initiated using, for example, the method 100. Thus, the voice calls in the plurality of parallel voice calls may change in a continuous manner, but at any time there may be at least two simultaneous voice calls.

According to an embodiment, the time estimate for performing the at least one step of the plurality of steps of the preconfigured script comprises a maximum time estimate for performing the at least one step and/or an average time estimate for performing the at least one step.

The average time estimate for performing at least one step may comprise, for example, a statistical mean for performing the at least one step, a statistical expectation value for performing the at least one step, and/or a statistical confidence level.

According to an embodiment, the maximum time estimate for performing the at least one step is based at least on a maximum allowed time to perform the at least one step indicated by the preconfigured script.

According to an embodiment, the time estimate for performing the at least one step of the plurality of steps of the preconfigured script is based on statistical information about at least one previously performed voice call.

Herein, some disclosure may be described in terms of functionality of a system, such as a voice call processing system. A system may refer to any system configured to perform the method 100. Any disclosure in relation to such a system can also be applied to the method 100 and vice versa.

According to an embodiment, the at least one voice call is performed by a voicebot and the voicebot is configured to perform the at least one voice call according to the preconfigured script.

The method 100 may be performed by, for example, a so-called voicebot that can be configured to interact with a user via speech during the at least one voice call. The voicebot can also perform other processing/actions/operations before and/or after performing the method 100.

A voicebot may receive inbound voice calls or perform outbound voice calls. The voicebot can use the method 100 to determine whether there is capacity for a new outbound voice call. The voicebot may, for example, receive a request for the new outbound voice call from a customer relationship management (CRM) system or from an enterprise resource planning (ERP) system. Such a request may comprise an indication about the target of the new voice call and/or an indication about a preconfigured script that the voicebot should follow during the new voice call.

The operations of the method 100 disclosed herein may be performed in various orders unless the opposite is stated explicitly or implicitly.

The method 100 can, for example, enable voice bots and/or similar systems to utilise available resources more efficiently. The method 100 can, for example, reduce waiting time of the system making the new voice call.

The method 100 can, for example, improve the performance of voice bots and/or similar systems.

Fig. 2 illustrates a flow chart representation of a script according to an embodiment.

In the embodiment of Fig. 2, a preconfigured script 200 may correspond to a voice call that is made in response to a contact request relating to order processing made by the user. Each step in the preconfigured script 200 is associated with a time estimate for performing the step and this time estimate is illustrated in seconds for each step in the embodiment of Fig. 2. The time estimates can be based on, for example, statistical analysis of previously performed voice calls.

According to an embodiment, the preconfigured script 200 comprises at least one branching point 220 corresponding to a question 201 to be presented to a user during the at least one voice call, wherein the at least one branching point 220 is associated with a plurality of branches 202, 203, 204, wherein each branch in the plurality of branches 202, 203, 204 corresponds to a possible answer that the user can provide to the question.

For example, in the embodiment of Fig. 2, the preconfigured script 200 comprises a question 201 about what the call relates to. Since this question has a plurality of possible answers that the user could provide, the preconfigured script 200 comprises a branching point 220 corresponding to this question 201. This branching point 220 is associated with a plurality of branches 202, 203, 204, wherein each branch in the plurality of branches 202, 203, 204 corresponds to a possible answer provided by the user to the question 201.

According to an embodiment, the computing 103, during the at least one voice call, the remaining time estimate for each voice call in the at least one voice call comprises: computing a remaining time estimate for each branch in the plurality of branches; and computing the remaining time estimate for the voice call according to the remaining time estimate of each branch in the plurality of branches.

For example, in the embodiment of Fig. 2, the preconfigured script 200 comprises three branches 202, 203, 204. The remaining time estimate for these branches can be 10 seconds, 40 seconds, and 20 seconds, respectively. Thus, before the user has answered the question 201, the remaining time estimate for the voice call can be computed to be approximately 23 seconds if a simple average is used.

In some embodiments, each branch in the plurality of branches can be associated with a probability of the branch being selected. The probability of each branch may be based on, for example, statistical analysis of previous voice calls. The computing the remaining time estimate for the voice call according to the remaining time estimate of each branch in the plurality of branches may then comprise computing a weighted average according to the probability of each branch in the plurality of branches being selected.

According to an embodiment, the computing the remaining time estimate for each branch in the plurality of branches comprises summing the time estimate for performing each step in the branch.

For example, in the embodiment of Fig. 2, the first branch 202 comprises one step and the time estimate of the one step is 10 seconds. Thus, the remaining time estimate for the first branch 202 can be 10 seconds. Similarly, the second branch 203 comprises four steps and the time estimate of each step is 10 seconds. Thus, the remaining time estimate for the second branch 203 can be 40 seconds. Similarly, the third branch 204 comprises two steps and the time estimate of each step is 10 seconds. Thus, the remaining time estimate for the third branch 204 can be 20 seconds.

According to an embodiment, the computing the remaining time estimate for the voice call according to the remaining time estimate of each branch in the plurality of branches comprises: computing the remaining time estimate for the voice call based on a maximum remaining time estimate out of the remaining time estimates of the plurality of branches and/or computing the remaining time estimate for the voice call based on an average remaining time estimate of the remaining time estimates of the plurality of branches.

For example, in the embodiment of Fig. 2, the preconfigured script comprises three branches 202, 203, 204. The remaining time estimate for these branches can be 10 seconds, 40 seconds, and 20 seconds, respectively. Thus, before the user has answered the question 201, the remaining time estimate for the voice call can be computed to be 40 seconds if the maximum remaining time estimate out of the remaining time estimates of the plurality of branches 202, 203, 204 is used.

According to an embodiment, the method 100 further comprises: obtaining a response to the question from the user via the voice call; selecting a branch out of the plurality of branches according to the response; and updating the remaining time estimate for the voice call according to a time estimate for performing each step in the selected branch.

According to an embodiment, the method 100 further comprises, during the at least one voice call, updating the remaining time estimate for the voice call at least once according to a time estimate for performing remaining steps of the preconfigured script.

For example, in the embodiment of Fig. 2, during the first step 201, the method 100 may compute the remaining time estimate to be, for example, 50 seconds according to the longest branch in the script.

If the user answers to the question 201 that they would like to enquire about the status of the order, the method 100 can proceed to the corresponding branch 202 of the preconfigured script. Since this branch comprises only the step of providing 205 the status of the order and the time estimate for performing this step is 10 seconds, at the start of the branch 202, the method 100 can compute the remaining time estimate for the voice call to be 10 seconds.

If the user answers to the question 201 that they would like to place a new order, the method 100 can proceed to the corresponding branch 203 of the preconfigured script. This branch 203 comprises the steps of asking 206 for the name of the user, asking 207 for the product to be ordered, asking 208 for a number of products to be ordered, and requesting 209 for a confirmation for the order, and the time estimate for performing each of these steps is 10 seconds. Thus, at the start of the branch 203, the method 100 can compute the remaining time estimate for the voice call to be 40 seconds, then 30 seconds before performing step 207, then 20 seconds before performing step 208, and 10 seconds before performing step 209.

If the user answers to the question 201 that they would like to cancel the order, the method 100 can proceed to the corresponding branch 204 of the preconfigured script. This branch comprises the steps of asking 210 for a reason for the cancellation and requesting 211 for a confirmation for the cancellation, and the time estimate for performing each of these steps is 10 seconds. Thus, at the start of the branch 204, the method 100 can compute the remaining time estimate for the voice call to be 20 seconds and then 10 seconds before performing step 211.

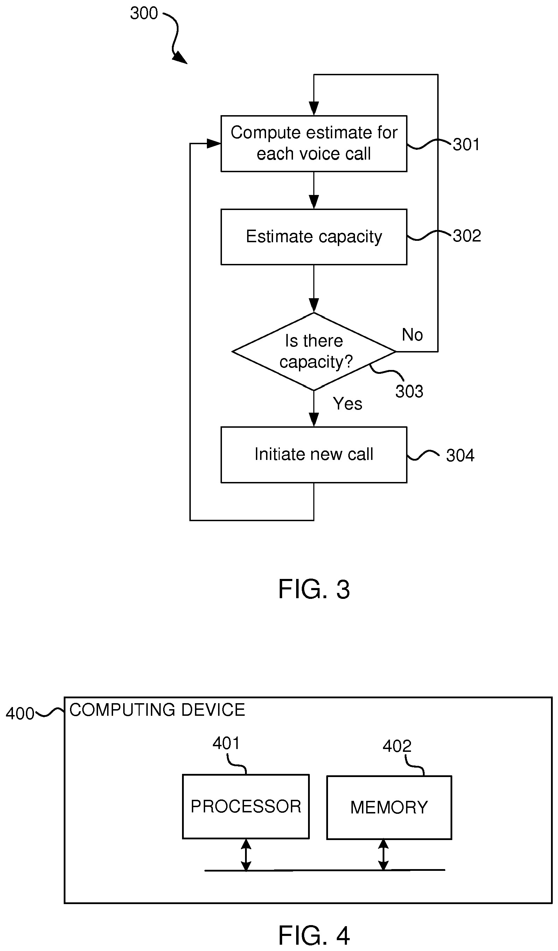

Fig. 3 illustrates a flow chart representation of a method according to an embodiment.

The method 300 illustrated in the embodiment of Fig. 3 is an example of how operations 103 and 104 of the method 100 can be performed.

The method 300 may comprise computing 301 the remaining time estimate for each voice call in the at least one voice call.

The method 300 may further comprise estimating 302, based on the remaining time estimate of each voice call in the at least one voice call, whether there is capacity for a new voice call within the next ***t_{d}*** seconds, wherein *t_{d}* is the connecting delay estimate of the new voice call.

The method 300 may further comprise determining 303 whether there is capacity for the new voice call. The method 300 may further comprise, in response to there being capacity for the new voice call, initiating 304 the new voice call. The method 300 may further comprise, after initiating 304 the new voice call or in response to there not being capacity, returning to operation 301. Thus, the method 300 can keep repeating operations 301 - 304 in order to initiate a new voice call whenever capacity is available.

Fig. 4 illustrates a schematic representation of a computing device according to an embodiment.

According to an embodiment, a computing device 400 comprises at least one processor 401 and at least one memory 402 including computer program code, the at least one memory 402 and the computer program code configured to, with the at least one processor 401, cause the computing device 400 to perform the method 100.

The computing device 400 may comprise at least one processor 401. The at least one processor 401 may comprise, for example, one or more of various processing devices, such as a co-processor, a microprocessor, a digital signal processor (DSP), a processing circuitry with or without an accompanying DSP, or various other processing devices including integrated circuits such as, for example, an application specific integrated circuit (ASIC), a field programmable gate array (FPGA), a microprocessor unit (MCU), a hardware accelerator, a special-purpose computer chip, or the like.

The computing device 400 may further comprise a memory 402. The memory 402 may be configured to store, for example, computer programs and the like. The memory 402 may comprise one or more volatile memory devices, one or more non-volatile memory devices, and/or a combination of one or more volatile memory devices and non-volatile memory devices. For example, the memory 402 may be embodied as magnetic storage devices (such as hard disk drives, magnetic tapes, etc.), optical magnetic storage devices, and semiconductor memories (such as mask ROM, PROM (programmable ROM), EPROM (erasable PROM), flash ROM, RAM (random access memory), etc.).

The computing device 400 may further comprise other components not illustrated in the embodiment of Fig. 4. The computing device 400 may comprise, for example, an input/output bus for connecting the computing device 400 to other devices.

When the computing device 400 is configured to implement some functionality, some component and/or components of the computing device 400, such as the at least one processor 401 and/or the memory 402, may be configured to implement this functionality. Furthermore, when the at least one processor 401 is configured to implement some functionality, this functionality may be implemented using program code comprised, for example, in the memory.

The computing device 400 may be implemented at least partially using, for example, a computer, some other computing device, or similar.

The method 100 and/or the computing device 400 may be utilised in, for example, automatic speech recognition (ASR) application such as in a so-called voicebot. A voicebot may be configured to obtain information from users by, for example, phone and convert the voice information into text information using ASR. The method 100 may be used to enable the voicebot to utilise available resources more efficiently.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments.

## Claims

1. A computer-implemented method (100) for managing voice call initiation, the method (100) comprising:
performing (101) at least one voice call according to a preconfigured script, wherein the at least one voice call is performed by a voicebot and the voicebot is configured to perform the at least one voice call according to the preconfigured script, wherein the preconfigured script comprises a plurality of steps;
obtaining (102), during the at least one voice call, a time estimate for performing at least one step of the plurality of steps of the preconfigured script;
computing (103), during the at least one voice call, a remaining time estimate for each voice call in the at least one voice call based on the time estimate for performing the at least one step of the plurality of steps of the preconfigured script; and
determining (104) whether to initiate a new voice call during the at least one voice call according to the remaining time estimate of each voice call in the at least one voice call.

2. The computer-implemented method (100) according to claim 1, wherein the determining whether to initiate the new voice call during the at least one voice call according to the remaining time estimate of each voice call in the at least one voice call comprises:
obtaining a connecting delay estimate for the new voice call;
determining whether there is voice call capacity during or after a time period corresponding to the connecting delay estimate based on the remaining time estimate of each voice call in the at least one voice call; and
in response to there being voice call capacity, initiating the new voice call.

3. The computer-implemented method (100) according to claim 1 or claim 2, wherein the at least one voice call comprises a plurality of parallel voice calls.

4. The computer-implemented method (100) according to any preceding claim, wherein the time estimate for performing the at least one step in the plurality of steps of the preconfigured script comprises a maximum time estimate for performing the at least one step and/or an average time estimate for performing the at least one step.

5. The computer-implemented method (100) according to claim 4, wherein the maximum time estimate for performing the at least one step is based at least on a maximum allowed time to perform the at least one step indicated by the preconfigured script.

6. The computer-implemented method (100) according to any preceding claim, wherein the preconfigured script (200) comprises at least one branching point (220) corresponding to a question (201) to be presented to a user during the at least one voice call, wherein the at least one branching point (220) is associated with a plurality of branches (202, 203, 204), wherein each branch in the plurality of branches corresponds to a possible answer that the user can provide to the question (201).

7. The computer-implemented method (100) according to claim 6, wherein the computing (103), during the at least one voice call, the remaining time estimate for each voice call in the at least one voice call comprises:
computing a remaining time estimate for each branch in the plurality of branches (202, 203, 204); and
computing the remaining time estimate for the voice call according to the remaining time estimate of each branch in the plurality of branches (202, 203, 204).

8. The computer-implemented method (100) according to claim 7, wherein the computing the remaining time estimate for each branch in the plurality of branches (202, 203, 204) comprises summing the time estimate for performing each step in the branch.

9. The computer-implemented method (100) according to claim 7 or claim 8, wherein the computing the remaining time estimate for the voice call according to the remaining time estimate of each branch in the plurality of branches (202, 203, 204) comprises:
computing the remaining time estimate for the voice call based on a maximum remaining time estimate out of the remaining time estimates of the plurality of branches; and/or
computing the remaining time estimate for the voice call based on an average remaining time estimate of the remaining time estimates of the plurality of branches (202, 203, 204).

10. The computer-implemented method (100) according to any of claims 6 - 9, the method further comprising:
obtaining a response to the question from the user via the voice call;
selecting a branch out of the plurality of branches (202, 203, 204) according to the response; and
updating the remaining time estimate for the voice call according to a time estimate for performing each step in the selected branch.

11. The computer-implemented method (100) according to any preceding claim, the method further comprising, during the at least one voice call, updating the remaining time estimate for the voice call at least once according to a time estimate for performing remaining steps of the preconfigured script.

12. The computer-implemented method (100) according to any preceding claim, wherein the time estimate for performing the at least one step of the plurality of steps of the preconfigured script is based on statistical information about at least one previously performed voice call.

13. A computing device (400), comprising at least one processor (401) and at least one memory (402) including computer program code, the at least one memory (402) and the computer program code configured to, with the at least one processor (401), cause the computing device (400) to perform the method (100) according to any preceding claim.

14. A computer program product comprising program code configured to perform the method (100) according to any of claims 1 - 12 when the computer program product is executed on a computer.

## Patentansprüche

1. Computerimplementiertes Verfahren (100) zum Verwalten von Sprachanrufeinleitung, wobei das Verfahren (100) umfasst:
Durchführen (101) mindestens eines Sprachanrufs gemäß einem vorab konfigurierten Skript, wobei der mindestens eine Sprachanruf von einem Sprachbot durchgeführt wird und der Sprachbot konfiguriert ist, um den Sprachanruf gemäß dem vorab konfigurierten Skript durchzuführen, wobei das vorab konfigurierte Skript eine Vielzahl von Schritten umfasst;
Erhalten (102), während des mindestens einen Sprachanrufs, einer Zeitschätzung zum Durchführen mindestens eines Schritts der Vielzahl von Schritten des vorab konfigurierten Skripts;
Berechnen (103), während des mindestens einen Sprachanrufs, einer Restzeitschätzung für jeden Sprachanruf in dem mindestens einen Sprachanruf basierend auf der Zeitschätzung zum Durchführen des mindestens einen Schritts der Vielzahl von Schritten des vorab konfigurierten Skripts; und
Bestimmen (104), ob ein neuer Sprachanruf während des mindestens einen Sprachanrufs eingeleitet werden soll, gemäß der Restzeitschätzung jedes Sprachanrufs in dem mindestens einen Sprachanruf.

2. Computerimplementiertes Verfahren (100) nach Anspruch 1, wobei das Bestimmen, ob der neue Sprachanruf während des mindestens einen Sprachanrufs eingeleitet werden soll, gemäß der Restzeitschätzung jedes Sprachanrufs in dem mindestens einen Sprachanruf umfasst:
Erhalten einer Verbindungsverzögerungsschätzung für den neuen Sprachanruf;
Bestimmen, ob eine Sprachanrufkapazität während oder nach einem Zeitraum vorhanden ist, der der Verbindungsverzögerungsschätzung entspricht, basierend auf der Restzeitschätzung jedes Sprachanrufs in dem mindestens einen Sprachanruf; und
als Reaktion darauf, dass eine Sprachanrufkapazität vorhanden ist, Einleiten des neuen Sprachanrufs.

3. Computerimplementiertes Verfahren (100) nach Anspruch 1 oder Anspruch 2, wobei der mindestens eine Sprachanruf eine Vielzahl von parallelen Sprachanrufen umfasst.

4. Computerimplementiertes Verfahren (100) nach einem vorstehenden Anspruch, wobei die Zeitschätzung zum Durchführen des mindestens einen Schritts in der Vielzahl von Schritten des vorab konfigurierten Skripts eine Maximalzeitschätzung zum Durchführen des mindestens einen Schritts und/oder eine Durchschnittszeitschätzung zum Durchführen des mindestens einen Schritts umfasst.

5. Computerimplementiertes Verfahren (100) nach Anspruch 4, wobei die Maximalzeitschätzung zum Durchführen des mindestens einen Schritts auf einer maximal erlaubten Zeit zum Durchführen des mindestens einen Schritts, der durch das vorab konfigurierte Skript angegeben ist, basiert.

6. Computerimplementiertes Verfahren (100) nach einem vorstehenden Anspruch, wobei das vorab konfigurierte Skript (200) mindestens einen Verzweigungspunkt (220) umfasst, der einer Frage (201) entspricht, die einem Benutzer während des mindestens einen Sprachanrufs zu stellen ist, wobei der mindestens eine Verzweigungspunkt (220) mit einer Vielzahl von Verzweigungen (202, 203, 204) verknüpft ist, wobei jede Verzweigung in der Vielzahl von Verzweigungen einer möglichen Antwort entspricht, die der Benutzer auf die Frage (201) geben kann.

7. Computerimplementiertes Verfahren (100) nach Anspruch 6, wobei das Berechnen (103), während des mindestens einen Sprachanrufs, der Restzeitschätzung für jeden Sprachanruf in dem mindestens einen Sprachanruf umfasst:
Berechnen einer Restzeitschätzung für jede Verzweigung in der Vielzahl von Verzweigungen (202, 203, 204); und
Berechnen der Restzeitschätzung für den Sprachanruf gemäß der Restzeitschätzung jeder Verzweigung in der Vielzahl von Verzweigungen (202, 203, 204).

8. Computerimplementiertes Verfahren (100) nach Anspruch 7, wobei das Berechnen der Restzeitschätzung für jede Verzweigung in der Vielzahl von Verzweigungen (202, 203, 204) das Summieren der Zeitschätzung zum Durchführen jedes Schritts in der Verzweigung umfasst.

9. Computerimplementiertes Verfahren (100) nach Anspruch 7 oder Anspruch 8, wobei das Berechnen der Restzeitschätzung für den Sprachanruf gemäß der Restzeitschätzung jeder Verzweigung in der Vielzahl von Verzweigungen (202, 203, 204) umfasst:
Berechnen der Restzeitschätzung für den Sprachanruf basierend auf einer Maximalrestzeitschätzung aus den Restzeitschätzungen der Vielzahl von Verzweigungen; und/oder
Berechnen der Restzeitschätzung für den Sprachanruf basierend auf einer Durchschnittsrestzeitschätzung der Restzeitschätzungen der Vielzahl von Verzweigungen (202, 203, 204).

10. Computerimplementiertes Verfahren (100) nach einem der Ansprüche 6-9, wobei das Verfahren weiter Folgendes umfasst:
Erhalten einer Antwort auf die Frage von dem Benutzer über den Sprachanruf;
Auswählen einer Verzweigung aus der Vielzahl von Verzweigungen (202, 203, 204) gemäß der Antwort; und
Aktualisieren der Restzeitschätzung für den Sprachanruf gemäß einer Zeitschätzung zum Durchführen jedes Schritts in der ausgewählten Verzweigung.

11. Computerimplementiertes Verfahren (100) nach einem vorstehenden Anspruch, wobei das Verfahren weiter während des mindestens einen Sprachanrufs das mindestens einmalige Aktualisieren der Restzeitschätzung für den Sprachanruf gemäß einer Zeitschätzung zum Durchführen verbleibender Schritte des vorab konfigurierten Skripts umfasst.

12. Computerimplementiertes Verfahren (100) nach einem vorstehenden Anspruch, wobei die Zeitschätzung zum Durchführen des mindestens einen Schritts der Vielzahl von Schritten des vorab konfigurierten Skripts auf statistischen Informationen über mindestens einen zuvor durchgeführten Sprachanruf basiert.

13. Computervorrichtung (400), die mindestens einen Prozessor (401) und mindestens einen Speicher (402) umfasst, der Computerprogrammcode einschließt, wobei der mindestens eine Speicher (402) und der Computerprogrammcode so konfiguriert sind, dass sie mit dem mindestens einen Prozessor (401) veranlassen, dass die Computervorrichtung (400) das Verfahren (100) nach einem vorstehenden Anspruch durchführt.

14. Computerprogrammprodukt, das einen Programmcode umfasst, der so konfiguriert ist, dass er das Verfahren (100) nach einem der Ansprüche 1-12 durchführt, wenn das Computerprogrammprodukt auf einem Computer ausgeführt wird.

## Revendications

1. Procédé mis en œuvre par ordinateur (100) pour gérer une initiation d'appel vocal, le procédé (100) comprenant :
le fait d'effectuer (101) au moins un appel vocal selon un script préconfiguré, dans lequel l'au moins un appel vocal est effectué par un robot vocal et le robot vocal est configuré pour effectuer l'au moins un appel vocal selon le script préconfiguré, dans lequel le script préconfiguré comprend une pluralité d'étapes ;
obtenir (102), pendant l'au moins un appel vocal, une estimation de temps pour effectuer au moins une étape parmi la pluralité d'étapes du script préconfiguré ;
calculer (103), pendant l'au moins un appel vocal, une estimation de temps restant pour chaque appel vocal dans l'au moins un appel vocal sur la base de l'estimation de temps pour effectuer l'au moins une étape parmi la pluralité d'étapes du script préconfiguré ; et
déterminer (104) si un nouvel appel vocal doit être initié pendant l'au moins un appel vocal selon l'estimation de temps restant de chaque appel vocal dans l'au moins un appel vocal.

2. Procédé mis en œuvre par ordinateur (100) selon la revendication 1, dans lequel la détermination de si un nouvel appel vocal doit être initié pendant l'au moins un appel vocal selon l'estimation de temps restant de chaque appel vocal dans l'au moins un appel vocal comprend :
obtenir une estimation de délai de connexion pour le nouvel appel vocal ;
déterminer s'il existe une capacité d'appels vocaux pendant ou après une période de temps correspondant à l'estimation de délai de connexion sur la base de l'estimation de temps restant de chaque appel vocal dans l'au moins un appel vocal ; et
en réponse au fait qu'il existe une capacité d'appels vocaux, initier le nouvel appel vocal.

3. Procédé mis en œuvre par ordinateur (100) selon la revendication 1 ou la revendication 2, dans lequel l'au moins un appel vocal comprend une pluralité d'appels vocaux parallèles.

4. Procédé mis en œuvre par ordinateur (100) selon une revendication précédente quelconque, dans lequel l'estimation de temps pour effectuer l'au moins une étape dans la pluralité d'étapes du script préconfiguré comprend une estimation de temps maximale pour effectuer l'au moins une étape et/ou une estimation de temps moyenne pour effectuer l'au moins une étape.

5. Procédé mis en œuvre par ordinateur (100) selon la revendication 4, dans lequel l'estimation de temps maximale pour effectuer l'au moins une étape est basée au moins sur un temps maximal autorisé pour effectuer l'au moins une étape, indiqué par le script préconfiguré.

6. Procédé mis en œuvre par ordinateur (100) selon une revendication précédente quelconque, dans lequel le script préconfiguré (200) comprend au moins un point de branchement (220) correspondant à une question (201) devant être présentée à un utilisateur pendant l'au moins un appel vocal, dans lequel l'au moins un point de branchement (220) est associé à une pluralité de branches (202, 203, 204), dans lequel chaque branche dans la pluralité de branches correspond à une réponse possible que l'utilisateur peut fournir à la question (201).

7. Procédé mis en œuvre par ordinateur (100) selon la revendication 6, dans lequel le calcul (103), pendant l'au moins un appel vocal, de l'estimation de temps restant pour chaque appel vocal dans l'au moins un appel vocal comprend :
calculer une estimation de temps restant pour chaque branche dans la pluralité de branches (202, 203, 204) ; et
calculer l'estimation de temps restant pour l'appel vocal selon l'estimation de temps restant de chaque branche dans la pluralité de branches (202, 203, 204).

8. Procédé mis en œuvre par ordinateur (100) selon la revendication 7, dans lequel le calcul de l'estimation de temps restant pour chaque branche dans la pluralité de branches (202, 203, 204) comprend le fait de sommer l'estimation de temps pour effectuer chaque étape dans la branche.

9. Procédé mis en œuvre par ordinateur (100) selon la revendication 7 ou la revendication 8, dans lequel le calcul de l'estimation de temps restant pour l'appel vocal selon l'estimation de temps restant de chaque branche dans la pluralité de branches (202, 203, 204) comprend :
calculer l'estimation de temps restant pour l'appel vocal sur la base d'une estimation de temps restant maximale parmi les estimations de temps restant de la pluralité de branches ; et/ou
calculer l'estimation de temps restant pour l'appel vocal sur la base d'une estimation de temps restant moyenne parmi les estimations de temps restant de la pluralité de branches (202, 203, 204).

10. Procédé mis en œuvre par ordinateur (100) selon l'une quelconque des revendications 6 à 9, le procédé comprenant en outre :
obtenir une réponse à la question de la part de l'utilisateur via l'appel vocal ;
sélectionner une branche parmi la pluralité de branches (202, 203, 204) selon la réponse ; et
mettre à jour l'estimation de temps restant pour l'appel vocal selon une estimation de temps pour effectuer chaque étape dans la branche sélectionnée.

11. Procédé mis en œuvre par ordinateur (100) selon une revendication précédente quelconque, le procédé comprenant en outre, pendant l'au moins un appel vocal, la mise à jour de l'estimation du temps restant pour l'appel vocal au moins une fois selon une estimation de temps pour effectuer les étapes restantes du script préconfiguré.

12. Procédé mis en œuvre par ordinateur (100) selon une revendication précédente quelconque, dans lequel l'estimation de temps pour effectuer l'au moins une étape parmi la pluralité d'étapes du script préconfiguré est basée sur des informations statistiques au sujet d'au moins un appel vocal précédemment effectué.

13. Dispositif informatique (400), comprenant au moins un processeur (401) et au moins une mémoire (402) incluant un code de programme informatique, l'au moins une mémoire (402) et le code de programme informatique étant configurés pour, avec l'au moins un processeur (401), amener le dispositif informatique (400) à mettre en œuvre le procédé (100) selon une quelconque revendication précédente.

14. Produit-programme informatique comprenant un code de programme configuré pour mettre en œuvre le procédé (100) selon l'une quelconque des revendications 1 à 12 lorsque le produit-programme informatique est exécuté sur un ordinateur.
